# EUROPEAN PATENT APPLICATION

(11) **EP 4 804 247 A1**
(43) Date of publication of application: **09.09.2026**
(21) Application number: 24886152.8
(22) Date of filing: 25.10.2024
(51) Int. Cl.: H01M 4/13, H01M 4/62, H01M 10/0585, H01M 10/052, H01M 4/02

(54) **POSITIVE ELECTRODE FOR ALL-SOLID-STATE BATTERY, POSITIVE ELECTRODE COMPOSITION, AND ALL-SOLID-STATE BATTERY**

(30) Priority: 31.10.2023 KR 20230148102
(71) Applicant: SAMSUNG SDI CO., LTD., Yongin-si, Gyeonggi-do 17084 (KR)
(72) Inventor: PARK, Seul Chan, Suwon-si Gyeonggi-do 16678 (KR); MIN, Myoung Ki, Suwon-si Gyeonggi-do 16678 (KR); HWANG, Soo Min, Suwon-si Gyeonggi-do 16678 (KR); KIM, Jin Woo, Suwon-si Gyeonggi-do 16678 (KR); YOU, Ho Seon, Suwon-si Gyeonggi-do 16678 (KR); KIM, Ju Yun, Suwon-si Gyeonggi-do 16678 (KR)
(74) Representative: Michalski Hüttermann & Partner mbB
(86) International application number: PCT/KR2024/016415
(87) International publication number: WO 2025/095477

(57) **Abstract**

Disclosed are a positive electrode for an all-solid-state battery, a positive electrode composition, and an all-solid-state battery comprising the positive electrode, the positive electrode for an all-solid-state battery comprising a current collector and a positive electrode active material layer disposed on the current collector, wherein the positive electrode active material layer comprises: a positive electrode active material; a sulfide-based solid electrolyte; a dispersion medium including a compound represented by chemical formula 1; a binder; an electrolyte salt; at least one of a mono- or higher functional (meth) acrylate having an alkylene glycol group, an oligomer thereof, and a cross-linked product thereof; and a conductive material.

## Description

### [Technical Field]

The present invention relates to a positive electrode for an all-solid-state battery, a positive electrode composition, and an all-solid-state battery.

### [Background Art]

Lithium rechargeable batteries, which have a high energy density and are portable, are mainly used as a driving power source for mobile information terminals such as cell phones, laptops, and smartphones. Since a liquid electrolyte is used in lithium rechargeable batteries, there are safety-related problems in that the lithium rechargeable batteries may explode or catch fire in the case of collisions or penetration. Therefore, an all-solid-state battery using a solid electrolyte instead of a liquid electrolyte has been proposed. All-solid-state batteries are safe because there is no risk of explosion by electrolyte leakage, and they have an advantage of being easily manufactured as thin batteries.

The background technology is described in Korean Patent No. 10-2350047.

### [Disclosure]

### [Technical Problem]

The present invention is directed to providing a positive electrode for an all-solid-state battery, which suppresses the deterioration of a sulfide-based solid electrolyte, exhibits high adhesion between a current collector or electrode plate and a positive electrode active material layer and improved ionic conductivity and electronic conductivity, enables stable cycling, and has high capacity, high efficiency and a long lifetime, a positive electrode composition, and an all-solid-state battery.

### [Technical Solution]

According to an aspect of the present invention, there is provided a positive electrode for an all-solid-state battery including a current collector and a positive electrode active material layer located on the current collector, wherein the positive electrode active material layer includes a positive electrode active material; a sulfide-based solid electrolyte; a dispersion medium including a compound of Chemical Formula 1; a binder; an electrolyte salt; one or more of a monofunctional or higher (meth)acrylate having an alkylene glycol group, an oligomer thereof, and a cross-linked product thereof; and a conductive material,

[Chemical Formula 1] CH₃C(=O)O-R¹

wherein R¹ is a C₇ to C₉ alkyl group.

According to another aspect of the present invention, there is provided a positive electrode composition for an all-solid-state battery including a positive electrode active material; a sulfide-based solid electrolyte; a dispersion medium including a compound of Chemical Formula 1; a binder; an electrolyte salt; one or more of a monofunctional or higher (meth)acrylate having an alkylene glycol group and an oligomer thereof; and a conductive material.

According to still another aspect of the present invention, there is provided an all-solid-state battery including the above-described positive electrode, a negative electrode, and a solid electrolyte layer located between the positive electrode and the negative electrode.

### [Advantageous Effects]

The positive electrode for an all-solid-state battery according to an embodiment of the present invention can suppress the deterioration of the sulfide-based solid electrolyte, exhibit high adhesion between the current collector or electrode plate and the positive electrode active material layer and improved ionic conductivity and electronic conductivity, enable stable cycling, and have high capacity, high efficiency and a long lifetime.

### [Description of Drawings]

FIGS. 1 and 2 are cross-sectional views schematically showing an all-solid-state battery according to an embodiment of the present invention;
FIG. 3 is a voltage graph according to the specific capacity of the battery, showing the results of evaluating the performance of Example 1 (solid line) and Example 2 (dotted line) during the first, second, and third charging and discharging;
FIG. 4 is a voltage graph according to the specific capacity of the battery, showing the results of evaluating the performance of Comparative Example 1 (solid line) and Comparative Example 2 (dotted line) during the first, second, and third charging and discharging;
FIG. 5 shows the results of evaluating electronic conductivity (-▲-) and ionic conductivity (-•-) in the positive electrode according to the content of PEGDA, an oligomer thereof, or a cross-linked product thereof in the positive electrode active material layer;
FIG. 6 shows the results of evaluating battery lifetime characteristics; and
FIG. 7 shows the results of evaluating battery lifetime characteristics.

### [Best Mode]

Hereinafter, specific embodiments will be described in detail so that those skilled in the art can easily implement them. However, the present invention may be implemented in many different forms and is not limited to the embodiments described herein.

The terminology used herein is for the purpose of describing embodiments only and is not intended to limit the present invention. Singular expressions include plural expressions unless the context clearly dictates otherwise.

Here, a "combination thereof" means a mixture, a laminate, a composite, a copolymer, an alloy, a blend, a reaction product of components.

Terms such as "include," "provide," or "have" are intended to designate the presence of the implemented features, numbers, steps, elements, or combinations thereof, and it should be understood that they do not preclude the presence or addition of other features, numbers, steps, elements, or combinations thereof.

In the drawings, the thickness is enlarged to clearly express various layers and regions, and similar reference numerals are given to similar parts throughout the specification. When a part of a layer, membrane, region, plate, etc. is said to be "above" or "on" another part, it includes not only the case where it is "directly on" another part, but also the case where another part is present therebetween. Conversely, when a part is said to be "directly on" another part, it means that no other part is present therebetween.

Here, "layer" includes not only the shape formed on the entire surface when observed in a plan view, but also the shape formed on some surfaces.

The average particle diameter and average size may be measured by methods well known to those skilled in the art and measured, for example, using a particle size analyzer or a transmission electron microscope, or a scanning electron microscope. Alternatively, the size, etc. may be measured using a dynamic light scattering method, data analysis may be performed, the number of particles may be counted for each particle size range, and the average particle diameter value may be calculated therefrom and obtained. Unless otherwise defined, the average particle diameter is the average particle diameter (D50) of particles with a cumulative volume of 50 vol% in the particle size distribution as measured by a particle size analyzer.

The term "or" is not to be interpreted in an exclusive sense, for example, "A or B" is interpreted to include A, B, A+B, and the like.

The term "electrode plate" may have the same meaning as "positive electrode active material layer."

### Positive electrode

The positive electrode for an all-solid-state battery according to an embodiment of the present invention includes a current collector and a positive electrode active material layer located on the current collector, wherein the positive electrode active material layer includes a positive electrode active material; a sulfide-based solid electrolyte; a dispersion medium including a compound of Chemical Formula 1; a binder; an electrolyte salt; one or more of a monofunctional or higher (meth)acrylate having an alkylene glycol group, an oligomer thereof, and a cross-linked product thereof; and a conductive material, and the current collector may be, for example, aluminum foil but is not limited thereto,

[Chemical Formula 1] CH₃C(=O)O-R¹

wherein R¹ is a C₇ to C₉ alkyl group.

C₇ and C₉ refer to the number of carbons. In other words, R¹ is an alkyl group having 7 to 9 carbon atoms. R¹ may be a chain alkyl group, a cyclic alkyl group, or a straight or branched alkyl group.

In Chemical Formula 1, R¹ may be, for example, a C₇ to C₈ alkyl group or a C₈ to C₉ alkyl group. The compound represented by Chemical Formula 1 may be expressed as a C₇ to C₉ alkyl acetate, and may be, for example, heptyl acetate, octyl acetate including n-octyl acetate or the like, or nonyl acetate. For example, the compound represented by Chemical Formula 1 may be octyl acetate including n-octyl acetate or the like.

In order to commercialize all-solid-state batteries, it is advantageous to apply a wet coating process to the preparation of the positive electrode active material layer. However, when an existing polar solvent is used during the wet coating of a composition for the positive electrode active material layer, there is a problem in that the sulfide-based solid electrolyte is dissolved in the polar solvent or degraded by the polar solvent. When a non-polar solvent such as heptane or the like is used, there is a problem in that the binder is not dissolved, and thus the electrode plate is not formed.

The compound of Chemical Formula 1 is a kind of non-polar solvent, and since the compound has very low reactivity with the sulfide-based solid electrolyte, it does not degrade the sulfide-based solid electrolyte, does not increase cell resistance, dissolves the binder well, and has an appropriate viscosity, thereby enabling uniform coating on the electrode plate. Furthermore, since the compound does not require harsh conditions during the drying process of the electrode plate and is effectively dried at room temperature, a relatively low temperature, or normal pressure, it is possible to prevent the problem of further deterioration of the sulfide-based solid electrolyte during the drying process.

Meanwhile, all-solid-state batteries have a problem of an increase in resistance between solid interfaces in the positive electrode plate. To solve this problem, a method of adding an electrolyte salt, which contains an ionic material, to the positive electrode active material layer may be considered. In order for the electrolyte salt to be added to the positive electrode active material layer without phase separation from materials other than solids, such as a binder, the electrolyte salt needs to be dissolved in the dispersion medium with high solubility.

A monofunctional or higher (meth)acrylate having an alkylene glycol group, an oligomer thereof, or a cross-linked product thereof may dissolve an electrolyte salt with high solubility without precipitation of the electrolyte salt in a dispersion medium including the compound represented by Chemical Formula 1 in the positive electrode composition. They may increase the ionic conductivity of the binder and the positive electrode active material layer by increasing the concentration in the binder of salts or ions dissociated from the electrolyte salt in the positive electrode active material layer. For example, the electrolyte salt may be a fluorine-containing lithium salt.

A monofunctional or higher (meth)acrylate having an alkylene glycol group, an oligomer thereof, or a cross-linked product thereof has low adhesion to an electrode plate or a current collector even when networked. However, a monofunctional or higher (meth)acrylate having an alkylene glycol group, an oligomer thereof, or a cross-linked product thereof is networked through ionic cross-linking with an electrolyte salt, thereby increasing the adhesion between the electrode plate and the positive electrode active material layer or between the solid materials in the positive electrode active material layer. High adhesion between the electrode plate and the positive electrode active material layer may improve the physical properties of the entire positive electrode by increasing the electronic conductivity of the entire positive electrode. For example, the electrolyte salt may be a fluorine-containing lithium salt.

As known to those skilled in the art, sulfide-based solid electrolytes are highly reactive. This high reactivity may cause a decrease in the performance of all-solid-state batteries. A monofunctional or higher (meth)acrylate having an alkylene glycol group, an oligomer thereof, or a cross-linked product thereof has low reactivity with respect to sulfide-based solid electrolytes. Thus, a positive electrode, which includes a combination of a sulfide-based solid electrolyte, a dispersion medium including the compound of Chemical Formula 1, and an electrolyte salt and additionally includes a monofunctional or higher (meth)acrylate having an alkylene glycol group, an oligomer thereof, or a cross-linked product thereof, may impart high capacity, high efficiency, and excellent lifetime characteristics to an all-solid-state battery. Preferably, the sulfide-based solid electrolyte may be a compound described below.

A monofunctional or higher (meth)acrylate having an alkylene glycol group, an oligomer thereof, or a cross-linked product thereof may be added to a lithium conductive binder, which is a combination of a binder and an electrolyte salt, to improve the ionic conductivity and adhesion of the binder.

In an embodiment, a binder, an electrolyte salt, a monofunctional or higher (meth)acrylate having an alkylene glycol group or an oligomer thereof may be included in the positive electrode active material layer in the form of an adhesive elastomer. Here, "adhesive elastomer" refers to a form in which a binder and an electrolyte salt are dispersed in a cross-linked product of a monofunctional or higher (meth)acrylate having an alkylene glycol group or an oligomer thereof.

Since adhesive elastomers have not only flexibility and elasticity but also adhesion, they may easily increase the adhesion between the electrode plate or current collector and the positive electrode active material layer. On the other hand, commonly used elastomers may be insufficient to increase the adhesion between the electrode plate or current collector and the positive electrode active material layer because they have flexibility and elasticity but do not have adhesion. It may be difficult to include adhesive gum with solid materials in the positive electrode active material layer, despite its adhesion, because it is not elastic and/or flexible. The adhesive elastomer may increase the adhesion between the electrode plate or current collector and the positive electrode active material layer, and the increased adhesion may stabilize the interface of solid materials in the positive electrode plate.

Whether all of the binder, the electrolyte salt, the monofunctional or higher (meth)acrylate having an alkylene glycol group or the oligomer thereof form an adhesive elastomer or are included as an adhesive elastomer depends on the content, number average molecular weight, and the like of the monofunctional or higher (meth)acrylate having an alkylene glycol group included in the positive electrode composition. According to an embodiment of the present invention, as the content of the monofunctional or higher (meth)acrylate having an alkylene glycol group, an oligomer thereof, or a cross-linked product thereof increases in the positive electrode composition, the form may be changed in the following order: a typical non-adhesive elastomer, an adhesive elastomer, and an adhesive gum.

According to an embodiment of the present invention, one or more of the monofunctional or higher (meth)acrylate having an alkylene glycol group, an oligomer thereof, and a cross-linked product thereof may be included in an amount of 1 to 30 wt%, for example, 1 to 25 wt% or 5 to 20 wt% of the remainder of the positive electrode active material layer excluding the positive electrode active material, the sulfide-based solid electrolyte, and the conductive material. Within the above range, an adhesive elastomer may be easily achieved.

According to an embodiment of the present invention, one or more of the monofunctional or higher (meth)acrylate having an alkylene glycol group, an oligomer thereof, and a cross-linked product thereof may be included in an amount of 1 to 30 wt%, for example, 1 to 25 wt% or 5 to 20 wt%, based on the total amount of the binder; the electrolyte salt; and one or more of the monofunctional or higher (meth)acrylate having an alkylene glycol group, an oligomer thereof, and a cross-linked product thereof. Within the above range, an, adhesive elastomer may be easily achieved.

According to an embodiment of the present invention, at least a portion of the monofunctional or higher (meth)acrylate having an alkylene glycol group, an oligomer thereof, or a cross-linked product thereof may be bonded to one or more of a binder and an electrolyte salt and dispersed in the positive electrode active material layer, which may be advantageous for increasing the ionic conductivity of the positive electrode active material layer.

According to an embodiment of the present invention, one or more of the monofunctional or higher (meth)acrylate having an alkylene glycol group, an oligomer thereof, and a cross-linked product thereof may be included in an amount of 99 wt% or more, for example, 99 to 100 wt% of the total (meth)acrylate-based compounds included in the positive electrode active material layer.

### Dispersion medium

The dispersion medium includes the compound of Chemical Formula 1.

Meanwhile, the positive electrode for an all-solid-state battery may be manufactured by the following steps: preparing a positive electrode composition; and coating a current collector with the positive electrode composition and drying it. In the method of manufacturing the positive electrode, the coating is a wet coating, which is easily applied to existing processes, and uniform coating is possible by applying the positive electrode composition. The drying is cost-effective and efficient because it is performed at a relatively low temperature and normal pressure. The drying may be performed, for example, at 20 °C to 100 °C, 30 °C to 90 °C, or 50 °C to 85 °C, and may be performed at normal pressure.

During the drying process, it was confirmed that most of the compound represented by Chemical Formula 1 was vaporized and a small amount of the compound remained. Accordingly, it can be said that the positive electrode for an all-solid-state battery includes the compound represented by Chemical Formula 1. The positive electrode may have high capacity, high efficiency, and a long lifetime without degradation of each component, especially the sulfide-based solid electrolyte.

Based on the total weight of the positive electrode active material layer, the compound represented by Chemical Formula 1 may be included in an amount of 0.1 wt% or less, for example, 0.0001 wt% to 0.1 wt%, 0.0001 wt% to 0.05 wt%, 0.0001 wt% to 0.04 wt%, 0.0001 wt% to 0.03 wt%, 0.0001 wt% to 0.02 wt%, 0.0001 wt% to 0.01 wt%, 0.001 wt% to 0.01 wt%, 0.001 wt% to 0.005 wt%, or 0.005 wt% to 0.01 wt%. It can be said that the compound represented by Chemical Formula 1, which is used as a kind of dispersion medium in the positive electrode composition when manufacturing the positive electrode, remains in such a small amount in the final positive electrode active material layer.

The dispersion medium may further include a compound of Chemical Formula 2 below:

[Chemical Formula 2] CH₃CH₂C(=O)O-R²

wherein R² is a C₅ to C₉ alkyl group.

C₅ and C₉ refer to the number of carbons. In other words, R² is an alkyl group having 5 to 9 carbon atoms. R² may be a chain alkyl group, a cyclic alkyl group, or a straight or branched alkyl group. R² in Chemical Formula 2 may be, for example, a C₅ to C₈ alkyl group, a C₅ to C₇ alkyl group, a C₅ to C₆ alkyl group, a C₆ to C₉ alkyl group, a C₇ to C₉ alkyl group, or a C₈ to C₉ alkyl group. The compound represented by Chemical Formula 2 may be expressed as a C₅ to C₉ alkyl propionate, and it may be, for example, pentyl propionate, hexyl propionate, heptyl propionate, octyl propionate, or nonyl propionate.

Since the dispersion medium includes both the compound represented by Chemical Formula 1 and the compound represented by Chemical Formula 2, it is possible to achieve uniform coating and perform drying under normal conditions, which may be effective in suppressing degradation of the sulfide-based solid electrolyte and the electrode plate.

Based on the total weight of the positive electrode active material layer, the compound represented by Chemical Formula 2 may be included in an amount of 0.1 wt% or less, for example, 0 wt% to 0.1 wt%, 0.0001 wt% to 0.1 wt%, 0.0001 wt% to 0.05 wt%, 0.0001 wt% to 0.04 wt%, 0.0001 wt% to 0.03 wt%, 0.0001 wt% to 0.02 wt%, 0.0001 wt% to 0.01 wt%, 0.001 wt% to 0.01 wt%, 0.001 wt% to 0.005 wt%, or 0.005 wt% to 0.01 wt%.

The compound represented by Chemical Formula 1 and the compound represented by Chemical Formula 2 may react with each other or cause chemical reactions with other components in the battery during the battery manufacturing process or during battery operation, and thus a derivative (or modified material) of the compound represented by Chemical Formula 1 and/or a derivative (or modified material) of the compound represented by Chemical Formula 2 may be present in the final positive electrode active material layer.

For example, when octyl acetate and pentyl propionate are used as a dispersion medium in the positive electrode composition during battery manufacturing, octyl propionate may be detected in the final positive electrode active material layer by the reaction of octyl acetate and pentyl propionate or other reactions. In this case, not only pentyl propionate, which is the dispersion medium, but also octyl propionate, which is a derivative of pentyl propionate, correspond to the compound represented by Chemical Formula 2.

The compound represented by Chemical Formula 1 and the compound represented by Chemical Formula 2 may be decomposed into an alcohol form due to chemical reactions during the battery manufacturing process or battery operation. In other words, an alcohol-type derivative may be detected in the positive electrode active material layer. For example, the positive electrode active material layer may further include a compound represented by Chemical Formula 3 below:

[Chemical Formula 3] R³-OH

(in Chemical Formula 3, R³ is a C₅ to C₉ alkyl group).

In Chemical Formula 3, R³ is an alkyl group having 5 to 9 carbon atoms, and it may be a chain alkyl group, a cyclic alkyl group, or a straight or branched alkyl group. R³ may be, for example, a C₅ to C₇ alkyl group or a C₇ to C₉ alkyl group. The compound represented by Chemical Formula 3 may be expressed as a C₅ to C₉ alcohol, and it may be, for example, pentyl alcohol, hexyl alcohol, heptyl alcohol, octyl alcohol, or nonyl alcohol.

The compound represented by Chemical Formula 3 is not a component used as a dispersion medium when manufacturing the positive electrode but may be a derivative of the compound represented by Chemical Formula 1 and/or a derivative of the compound represented by Chemical Formula 2.

In this way, based on the total weight of the positive electrode active material layer, the compound represented by Chemical Formula 3 may be included in an amount of 0.1 wt% or less, for example, 0.0001 wt% to 0.1 wt%, 0.0001 wt% to 0.05 wt%, 0.0001 wt% to 0.04 wt%, 0.0001 wt% to 0.03 wt%, 0.0001 wt% to 0.02 wt%, 0.0001 wt% to 0.01 wt%, 0.001 wt% to 0.01 wt%, 0.001 wt% to 0.005 wt%, or 0.005 wt% to 0.01 wt%.

The analysis method for the compound represented by Chemical Formula 1, the compound represented by Chemical Formula 2, and/or the compound represented by Chemical Formula 3 in the positive electrode active material layer is as follows:
0.5 g of the positive electrode plate is scraped off the all-solid-state battery and immersed in 2 mL of a diethyl carbonate (DEC) solution. After ultrasonic dispersion is performed for 30 minutes, the solution is filtered using a 0.25 µm polytetrafluoroethylene (PTFE) filter. The composition of the obtained material is analyzed using a gas chromatography-flame ionization detector (GC/FID). The gas chromatography conditions are as follows.
(1) Column: RTX-200 (30 m x 320 um, 1 um)
(2) Flow rate: 4 mL/min
(3) Inlet: 210 °C
(4) Oven temp.: 50/0-10-250/0, 5:1

### Electrolyte salt

The electrolyte salt is ionized in the binder and may lower the resistance between solid interfaces in the positive electrode plate. The electrolyte salt is a solid material and may include one or more of an inorganic lithium salt and an organic lithium salt.

The inorganic lithium salt may be an inorganic fluoride salt such as LiPF₆, LiBF₄, LiAsF₆, and LiSbF₆, a perhalogenate such as LiClO₄, LiBrO₄, and LiIO₄, or an inorganic chloride salt such as LiAlCl₄.

The organic lithium salt may include one or more of perfluoroalkane sulfonates such as LiCF₃SO₃, perfluoroalkane sulfonylimide salts such as LiN(CF₃SO₂)₂, LiN(CF₃CF₂SO₂)₂, LiN(FSO₂)₂, and LiN(CF₃SO₂)(C₄F₉SO₂), perfluoroalkanesulfonyl methide salts such as such as LiC(CF₃SO₂)₃, and fluoroalkyl fluorophosphates such as Li[PF₅(CF₂CF₂CF₃)], Li[PF₄(CF₂CF₂CF₃)₂], Li[PF₃(CF₂CF₂CF₃)₃], Li[PF₅(CF₂CF₂CF₂CF₃)], Li[PF₄(CF₂CF₂CF₂CF₃)₂], and Li[PF₃(CF₂CF₂CF₂CF₃)₃].

According to an embodiment of the present invention, the electrolyte salt may be a fluorine-containing organic lithium salt, for example, a perfluoroalkane sulfonylimide salt. The perfluoroalkane sulfonylimide salt may easily achieve the above-described effects.

In the positive electrode active material layer, the electrolyte salt may be included in an amount of 0.001 to 10 wt%, for example, 0.001 to 5 wt%, 0.01 to 1 wt%, or 0.01 to 0.5 wt%, based on the total weight of the positive electrode active material layer. When the electrolyte salt is included in the above range, the positive electrode active material layer may easily provide the above-described effects.

### One or more of monofunctional or higher (meth)acrylate having alkylene glycol group, oligomer thereof, and cross-linked product thereof

The monofunctional or higher (meth)acrylate having an alkylene glycol group is mono- to tri-, mono-, or di-functional (meth)acrylate, and is a compound having 2 moles or more of *-[-O-R³-]* units (* is the connection site of the element, and R³ is a straight or branched alkylene group having 1 to 5 carbon atoms) per molecule, and may include one or more of the compounds represented by Chemical Formula 4 and Chemical Formula 5: 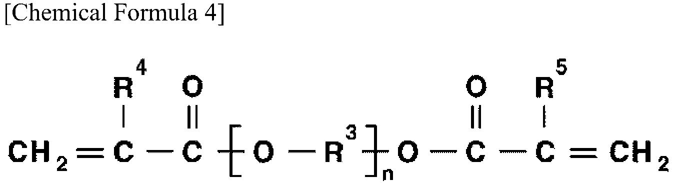 (in Chemical Formula 4,
R³ is a straight or branched alkylene group having 1 to 5 carbon atoms,
R⁴ and R⁵ are each independently hydrogen or a methyl group, and
n is an integer from 2 to 1000,) 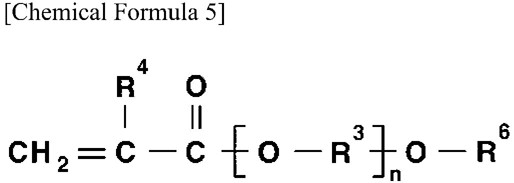
(in Chemical Formula 5,
R³ is a straight or branched alkylene group having 1 to 5 carbon atoms,
R⁴ is hydrogen or a methyl group,
R⁶ is hydrogen or a straight or branched alkyl group having 1 to 5 carbon atoms, and
n is an integer from 2 to 1000).

For example, the monofunctional or higher (meth)acrylate having an alkylene glycol group may include one or more of poly(ethylene glycol) di(meth)acrylate, poly(ethylene glycol) mono(meth)acrylate, and poly(ethylene glycol) methyl ether mono(meth)acrylate.

The monofunctional or higher (meth)acrylate having an alkylene glycol group or an oligomer thereof may have a number average molecular weight (Mn) of 300 to 2000, for example, 400 to 1500, 500 to 1000, or 500 to 800. Within the above range, there may be an effect of facilitating the formation of an adhesive elastomer. The number average molecular weight may be measured by a common method known to those skilled in the art, and for example, it may be calculated through polystyrene conversion and gel permeation chromatography.

The cross-linked product of the monofunctional or higher (meth)acrylate having an alkylene glycol group may be a self-crosslinked product of a monofunctional or higher (meth)acrylate having an alkylene glycol group or an oligomer thereof.

In the positive electrode active material layer, one or more of the monofunctional or higher (meth)acrylate having an alkylene glycol group, an oligomer thereof, and a cross-linked product thereof may be included in an amount of 0.001 to 1 wt%, for example, 0.005 to 0.5 wt%, 0.01 to 0.1 wt%, or 0.01 to 0.05 wt%. When the monofunctional or higher (meth)acrylate having an alkylene glycol group, an oligomer thereof, or a cross-linked product thereof is included within the above content range, the positive electrode active material layer may easily achieve the above-described effects.

### Binder

The binder may serve to adhere the positive electrode active material particles to each other and adhere the positive electrode active material to the current collector. Examples of the binder may include polymers including polyvinyl alcohol, carboxymethylcellulose, hydroxypropylcellulose, diacetylcellulose, polyvinyl chloride, carboxylated polyvinyl chloride, polyvinyl fluoride, and ethylene oxide, polyvinylpyrrolidone, polyurethane, polytetrafluoroethylene, polyvinylidene fluoride, a vinylidene fluoride-hexafluoropropylene copolymer, polyethylene, polypropylene, styrene butadiene rubber, acrylated styrene butadiene rubber, polyacrylonitrile, an epoxy resin, nylon, poly(meth)acrylate, and polymethyl(meth)acrylate, but are not limited thereto.

Among them, the binder according to an embodiment of the present invention may be one or more selected from polyvinylidene fluoride, a polyvinylidene fluoride-hexafluoropropylene copolymer, polytetrafluoroethylene, styrene butadiene rubber, polyacrylonitrile, and polymethyl (meth)acrylate. These binders may be well dissolved in the compound represented by Chemical Formula 1, which is a dispersion medium in the positive electrode composition, and thus it is possible to achieve uniform coating and excellent performance of the electrode plate.

The binder may be included in an amount of 0.1 to 5 wt%, for example, 0.1 to 3 wt% based on the total weight of the components of the positive electrode or the total weight of the positive electrode active material layer. When the binder is included in the above content range, the positive electrode active material layer may easily achieve the effects of the present invention.

### Positive electrode active material

As a positive electrode active material, a compound capable of reversible intercalation and deintercalation of lithium (lithiated intercalation compound) may be used. Examples of the positive electrode active material may include the compounds represented by the following Chemical Formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < a < 2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2); and

LiₐFePO₄ (0.90 ≤ a ≤ 1.8).

In the above Chemical Formulas, A is selected from the group consisting of Ni, Co, Mn, and combinations thereof; X is selected from the group consisting of Al, Ni, Co, Mn, Cr, Fe, Mg, Sr, V, rare earth elements, and combinations thereof; D is selected from the group consisting of O, F, S, P, and combinations thereof; E is selected from the group consisting of Co, Mn, and combinations thereof; T is selected from the group consisting of F, S, P, and combinations thereof; G is selected from the group consisting of Al, Cr, Mn, Fe, Mg, La, Ce, Sr, V, and combinations thereof; Q is selected from the group consisting of Ti, Mo, Mn, and combinations thereof; Z is selected from the group consisting of Cr, V, Fe, Sc, Y, and combinations thereof; and J is selected from the group consisting of V, Cr, Mn, Co, Ni, Cu, and combinations thereof.

The positive electrode active material may be a lithium-metal composite oxide, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium manganese oxide (LMO), or lithium iron phosphate oxide (LFP).

A compound in which a coating layer is formed on the surface of the above compound may be used, or a mixture of the above compound and a compound having a coating layer may be used. This coating layer may include at least one coating element compound selected from the group consisting of oxides, hydroxides, oxyhydroxides, oxycarbonates, and hydroxycarbonates of coating elements. The compounds constituting the coating layer may be amorphous or crystalline. Coating elements included in the coating layer may be Mg, Al, Co, K, Na, Ca, Si, Ti, V, Sn, Ge, Ga, B, As, Zr, or a combination thereof. As an example, the coating layer may include Li₂O-ZrO₂ (LZO). The coating layer formation process may include a method that does not adversely affect the physical properties of the positive electrode active material, such as spray coating and dipping.

The positive electrode active material may include, for example, one or more types of lithium-metal composite oxides represented by Chemical Formula 6 below.

[Chemical Formula 6] LiₐM¹¹_{1-y11-z11}M¹²_{y11}M¹³_{z11}O₂

In Chemical Formula 6, 0.9≤a≤1.8, 0≤y11≤1, 0≤z11≤1, and 0≤y11+z11<1, are satisfied, and M¹¹, M¹², and M¹³ are each independently selected from elements including Ni, Co, Mn, Al, Mg, Ti, or Fe and combinations thereof.

For example, M¹¹ may be Ni, and M¹² and M¹³ may each be independently metals such as Co, Mn, Al, Mg, Ti, or Fe. In a specific embodiment, M¹¹ may be Ni, M¹² may be Co, and M¹³ may be Mn or Al, but are not limited thereto.

In an embodiment, the positive electrode active material may include a lithium nickel-based composite oxide represented by Chemical Formula 7 below.

[Chemical Formula 7] Liₐ₁₂Niₓ₁₂M¹⁴_{y12}M¹⁵_{1-x12-y12}O₂

In Chemical Formula 7, 0.9≤a12≤1.8, 0.3≤x12≤1, and 0≤y12≤0.7 are satisfied, and M¹⁴ and M¹⁵ are each independently at least one element selected from Al, B, Ba, Ca, Ce, Co, Cr, F, Fe, Mg, Mn, Mo, Nb, P, S, Si, Sr, Ti, V, W, and Zr.

The positive electrode active material may include, for example, a lithium nickel cobalt-based oxide represented by Chemical Formula 8.

[Chemical Formula 8] Liₐ₁₃Niₓ₁₃Co_{y13}M¹⁶_{1-x13-y13}O₂

In Chemical Formula 8, 0.9≤a13≤1.8, 0.3≤x13<1, and 0<y13≤0.7 are satisfied, and M¹⁶ is at least one element selected from Al, B, Ba, Ca, Ce, Cr, F, Fe, Mg, Mn, Mo, Nb, P, S, Si, Sr, Ti, V, W, and Zr.

In Chemical Formula 8, x13 and y13 may satisfy 0.3≤x13≤0.99 and 0.01≤y13≤0.7, 0.4≤x13≤0.99 and 0.01≤y13≤0.6, 0.5≤x13≤0.99 and 0.01≤y13≤0.5, 0.6≤x13≤0.99 and 0.01≤y13≤0.4, 0.7≤x13≤0.99 and 0.01≤y13≤0.3, 0.8≤x13≤0.99 and 0.01≤y13≤0.2, or 0.9≤x13≤0.99 and 0.01≤y13≤0.1.

The content of nickel in the lithium-nickel-based composite oxide may be 30 mol% or more, for example, 40 mol% or more, 50 mol% or more, 60 mol% or more, 70 mol% or more, 80 mol% or more, or 90 mol% or more and 99.9 mol% or less or 99 mol% or less based on the total weight of metals excluding lithium. For example, the content of nickel in the lithium nickel-based composite oxide may be higher than the content of other metals such as cobalt, manganese, and aluminum. When the nickel content satisfies the above range, the positive electrode active material may achieve high capacity and exhibit excellent battery performance.

The average particle diameter of the positive electrode active material may be 1 µm to 25 µm, for example, 4 µm to 25 µm, 5 µm to 20 µm, 8 µm to 20 µm, or 10 µm to 18 µm. A positive electrode active material with this particle size range may be harmoniously mixed with other components in the positive electrode active material layer and may achieve high capacity and high energy density.

The positive electrode active material may be in the form of secondary particles made by agglomerating a plurality of primary particles, or may be in the form of single particles. Also, the positive electrode active material may be spherical or close to a spherical shape, or may be polyhedral or amorphous.

Based on the total weight of the positive electrode active material layer, the positive electrode active material may be included in an amount of 55 to 99 wt%, for example, 74 to 89.8 wt%. When the positive electrode active material is included within the above range, it is possible to maximize the capacity of the all-solid-state battery and improve lifetime characteristics.

### Solid electrolyte

The solid electrolyte may be an inorganic solid electrolyte, such as a sulfide-based solid electrolyte and oxide-based solid electrolyte, or a solid polymer electrolyte.

In an embodiment, the solid electrolyte may be a sulfide-based solid electrolyte with excellent ionic conductivity. The sulfide-based solid electrolyte may be, for example, Li₂S-P₂S₅, Li₂S-P₂S₅-LiX (X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are integers, and Z is Ge, Zn, or Ga), Li₂S-GeS₂, Li₂S-SiS₂-Li₃PO₄, or Li₂S-SiS₂-LiₚMO_{q} (p and q are integers and M is P, Si, Ge, B, Al, Ga, or In).

For example, the sulfide-based solid electrolyte may be obtained by mixing Li₂S and P₂S₅ at a molar ratio of 50:50 to 90:10, or 50:50 to 80:20. Within the above mixing ratio range, a sulfide-based solid electrolyte having excellent ionic conductivity may be manufactured. Ionic conductivity may be further improved by adding SiS₂, GeS₂, B₂S₃, and the like as other components. Mechanical milling or a solution method may be applied as a mixing method. Mechanical milling is a method of placing and vigorously stirring starting materials and a ball mill in a reactor to cause the starting materials to become fine particles. When a solution method is used, a solid electrolyte may be obtained as a precipitate by mixing the starting materials in a solvent. In addition, additional firing may be performed after the mixing. When additional firing is performed, the crystals of the solid electrolyte may become more solid.

As an example, the solid electrolyte may be an argyrodite-type sulfide-based solid electrolyte. The sulfide-based solid electrolyte is, for example, LiₐM_{b}P_{c}S_{d}Aₑ (a, b, c, d, and e are all 0 to 12, M is Ge, Sn, Si, or a combination thereof, and A is F, Cl, Br, or I), and specifically, it may be Li₃PS₄, Li₇P₃S₁₁, Li₆PS₅Cl, Li₆PS₅Br, Li₆PS₅I, and the like. Since the sulfide-based solid electrolyte has a high ionic conductivity close to the range of 10⁻⁴ to 10⁻² S/cm, which is the ionic conductivity of a typical liquid electrolyte at room temperature, the sulfide-based solid electrolyte may form a tight bond between the positive electrode active material and the solid electrolyte without causing a decrease in ionic conductivity, and may further form a tight interface between the electrode layer and the solid electrolyte layer. An all-solid-state battery containing the sulfide-based solid electrolyte may have improved battery performance such as rate characteristics, coulombic efficiency, and lifetime characteristics.

The sulfide-based solid electrolyte may be amorphous or crystalline, or may be a mixture thereof.

The solid electrolyte may be an oxide-based inorganic solid electrolyte in addition to a sulfide-based material. The oxide-based inorganic solid electrolyte may include Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, garnet-based ceramics Li₃₊ₓLa₃M₂O₁₂ (M=Te, Nb, or Zr; x is an integer from 1 to 10), or combinations thereof.

The solid electrolyte is in the form of particles, and the average particle diameter (D50) may be 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. The solid electrolyte may effectively penetrate between positive electrode active materials and has excellent contact with the positive electrode active material and connectivity between solid electrolyte particles.

Based on the total weight of the positive electrode active material layer, the solid electrolyte may be included in an amount of 0.1 to 35 wt%, for example, 1 wt% to 35 wt%, 5 wt% to 30 wt%, 8 wt% to 25 wt%, or 10 wt% to 20 wt%. In the positive electrode active material layer, based on the total weight of the positive electrode active material and the solid electrolyte, the positive electrode active material may be included in an amount of 65 wt% to 99 wt% and the solid electrolyte may be included in an amount of 1 wt% to 35 wt%, and for example, 80 wt% to 90 wt% of the positive electrode active material and 10 wt% to 20 wt% of the solid electrolyte may be included. When the solid electrolyte is included within the above content range in the positive electrode, the efficiency and lifetime characteristics of the all-solid-state battery may be improved without reducing capacity.

### Conductive material

The conductive material is used to impart conductivity to the electrode, and any electronically conductive material may be used as long as it does not cause chemical changes. The conductive material may include, for example, carbon-based materials such as natural graphite, artificial graphite, carbon black, acetylene black, ketjen black, carbon fibers, carbon nanofibers, and carbon nanotubes; metallic substances in the form of a metal powder or metal fiber including copper, nickel, aluminum, and silver; conductive polymers such as polyphenylene derivatives; or combinations thereof.

Based on the total weight of each component in the positive electrode for an all-solid-state battery or the total weight of the positive electrode active material layer, the conductive material may be included in an amount of 0.1 to 5 wt% or 0.1 to 3 wt%. In the above content range, the conductive material may improve electrical conductivity without reducing battery performance.

Based on the total weight of the positive electrode active material, the solid electrolyte, the binder, and the conductive material, the positive electrode active material layer may include 55 wt% to 99 wt% of the positive electrode active material; 0.1 wt% to 35 wt% of the solid electrolyte; 0.1 wt% to 5 wt% of the binder; 0.001 to 10 wt% of the electrolyte salt; 0.001 to 1 wt% of one or more of monofunctional or higher (meth)acrylate having an alkylene glycol group, an oligomer thereof, and a cross-linked product thereof; and 0.1 wt% to 5 wt% of the conductive material. As a specific example, 74 wt% to 89.8 wt% of the positive electrode active material; 10 wt% to 20 wt% of the solid electrolyte; 0.1 wt% to 3 wt% of the binder; 0.001 to 5 wt% of the electrolyte salt, 0.005 to 0.5 wt% of one or more of monofunctional or higher (meth)acrylate having an alkylene glycol group, an oligomer thereof, and a cross-linked product thereof, and 0.1 wt% to 3 wt% of the conductive material may be included. Within the above content range, the lifetime characteristics of the battery may be improved while maximizing capacity.

### Positive electrode composition

According to an embodiment of the present invention, the positive electrode composition includes a positive electrode active material, a sulfide-based solid electrolyte, a dispersion medium including the compound of Chemical Formula 1, a binder, an electrolyte salt, a monofunctional or higher (meth)acrylate having an alkylene glycol group or an oligomer thereof, and a conductive material. The positive electrode composition may be expressed as a positive electrode active material layer composition or a composition for forming a positive electrode active material layer.

The detailed description of the positive electrode active material, sulfide-based solid electrolyte, dispersion medium including the compound of Chemical Formula 1, binder, electrolyte salt, monofunctional or higher (meth)acrylate having an alkylene glycol group or oligomer thereof, and conductive material is the same as described above.

In a total of 100 parts by weight based on solid content, 55 to 99 parts by weight of the positive electrode active material, 0.1 to 35 parts by weight of the sulfide-based solid electrolyte, 0.1 to 5 parts by weight of the binder, 0.001 to 10 parts by weight of the electrolyte salt, 0.001 to 1 part by weight of the monofunctional or higher (meth)acrylate having an alkylene glycol group or an oligomer thereof, and 0.1 to 5 parts by weight of the conductive material may be included, and based on a total of 100 parts by weight, 20 to 100 parts by weight or 20 to 60 parts by weight of the dispersion medium including the compound of Chemical Formula 1 may be included. Within the above range, the effects of the present invention may be easily achieved.

### All-solid-state battery

In an embodiment of the present invention, there is provided an all-solid-state battery including the above-described positive electrode, a negative electrode, and a solid electrolyte layer located between the positive electrode and the negative electrode. The all-solid-state battery may be expressed as an all-solid-state rechargeable battery or an all-solid-state lithium rechargeable battery.

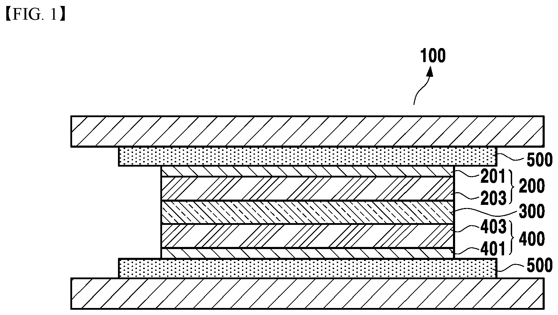

FIG. 1 is a cross-sectional view of all-solid-state battery 100 according to an embodiment of the present invention. Referring to FIG. 1, the all-solid-state battery 100 may have a structure in which an electrode assembly, wherein a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is accommodated in a case such as a pouch. The all-solid-state battery 100 may further include an elastic layer 500 on the outside of at least one of the positive electrode 200 and the negative electrode 400. Although FIG. 1 shows one electrode assembly including a negative electrode 400, a solid electrolyte layer 300, and a positive electrode 200, an all-solid-state battery may also be manufactured by stacking two or more electrode assemblies.

### Negative electrode

For example, the negative electrode for an all-solid-state battery may include a current collector and a negative electrode active material layer located on the current collector. The negative electrode active material layer includes a negative electrode active material and may further include a binder, a conductive material, and/or a solid electrolyte.

The negative electrode active material may include a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ions is a carbon-based negative electrode active material, and it may include, for example, crystalline carbon, amorphous carbon, or a combination thereof. Examples of the crystalline carbon may include graphite such as amorphous, plate-shaped, flake-shaped, spherical or fibrous natural graphite or artificial graphite, and examples of the amorphous carbon may include soft carbon, hard carbon, mesophase pitch carbide, and calcined coke.

The alloy of the lithium metal may be an alloy of lithium with one or more metals selected from Na, K, Rb, Cs, Fr, Be, Mg, Ca, Sr, Si, Sb, Pb, In, Zn, Ba, Ra, Ge, Al, and Sn.

An Si-based negative electrode active material or an Sn-based negative electrode active material may be used as a material capable of doping and dedoping lithium. The Si-based negative electrode active material may be silicon, a silicon-carbon composite, SiOₓ (0<x<2), or an Si-Q alloy (where Q is one selected from the group consisting of an alkali metal, an alkaline earth metal, a group 13 element, a group 14 element, a group 15 element, a group 16 element, a transition metal, a rare earth element, and combinations thereof, but is not Si), and the Sn-based negative electrode active material may be Sn, SnO₂, or an Sn-R alloy (where R is one selected from the group consisting of an alkali metal, an alkaline earth metal, a group 13 element, a group 14 element, a group 15 element, a group 16 element, a transition metal, a rare earth element, and combinations thereof, but is not Sn), and at least one of these may be mixed with SiO₂. The elements Q and R may be one selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

For example, the silicon-carbon composite may be a silicon-carbon composite including a core, which contains crystalline carbon and silicon particles, and an amorphous carbon coating layer on the surface of the core. The crystalline carbon may be artificial graphite, natural graphite, or a combination thereof. The amorphous carbon precursor may be coal-based pitch, mesophase pitch, petroleum-based pitch, coal-based oil, petroleum-based heavy oil, or a polymer resin such as a phenol resin, a furan resin, and a polyimide resin. The content of silicon may be 10 wt% to 50 wt% based on the total weight of the silicon-carbon composite. In addition, based on the total weight of the silicon-carbon composite, the content of the crystalline carbon may be 10 wt% to 70 wt% and the content of the amorphous carbon may be 20 wt% to 40 wt%. In addition, the thickness of the amorphous carbon coating layer may be 5 nm to 100 nm.

The average particle diameter (D50) of the silicon particles may be 10 nm to 20 µm, for example, 10 nm to 200 nm. The silicon particles may be present in an oxidized form, and in this case, the Si:O atomic content ratio in the silicon particles, which indicates the degree of oxidation, may be 99:1 to 33:67. The silicon particles may be SiOₓ particles, and in this case, the x range in SiOₓ may be greater than 0 and less than 2.

The Si-based negative electrode active material or Sn-based negative electrode active material may be used by mixing with a carbon-based negative electrode active material. The mixing ratio of the Si-based negative electrode active material or Sn-based negative electrode active material and a carbon-based negative electrode active material may be a weight ratio of 1:99 to 90:10.

In the negative electrode active material layer, based on the total weight of the negative electrode active material layer, the content of the negative electrode active material may be 95 wt% to 99 wt%.

In an embodiment, the negative electrode active material layer further includes a binder, and optionally, may further include a conductive material. The content of the binder in the negative electrode active material layer may be 1 wt% to 5 wt% based on the total weight of the negative electrode active material layer. When a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other and adhere the negative electrode active material to the current collector. The binder may be a water-insoluble binder, a water-soluble binder, or a combination thereof.

The water-insoluble binder may be polyvinyl chloride, carboxylated polyvinyl chloride, polyvinyl fluoride, polymers containing ethylene oxide, an ethylene propylene copolymer, polystyrene, polyvinylpyrrolidone, polyurethane, polytetrafluoroethylene, polyvinylidene fluoride, polyethylene, polypropylene, polyamidoimide, polyimide, or combinations thereof.

The water-soluble binder may be a rubber-based binder or a polymer resin binder. The rubber-based binder may be selected from styrene-butadiene rubber, acrylated styrene-butadiene rubber, acrylonitrile-butadiene rubber, acrylic rubber, butyl rubber, fluorine rubber, and combinations thereof. The polymer resin binder may be polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and combinations thereof.

When a water-soluble binder is used as the negative electrode binder, a cellulose-based compound that can impart viscosity may be further included. As the cellulose-based compound, a mixture of one or more types of carboxymethyl cellulose, hydroxypropylmethyl cellulose, methyl cellulose, or alkali metal salts thereof may be used. Na, K, or Li may be used as the alkali metal. The amount of used thickener may be 0.1 parts by weight to 3 parts by weight based on 100 parts by weight of the negative electrode active material.

The conductive material is used to impart conductivity to the electrode, and any material that has electronic conductivity without causing chemical change may be used. The conductive material may include, for example, carbon-based materials such as natural graphite, artificial graphite, carbon black, acetylene black, ketjen black, carbon fiber, carbon nanofiber, and carbon nanotubes; metallic substances in the form of a metal powder or metal fiber including copper, nickel, aluminum, and silver; conductive polymers such as polyphenylene derivatives; and combinations thereof.

The negative electrode current collector may be selected from copper foil, nickel foil, stainless steel foil, titanium foil, nickel foam, copper foam, a polymer substrate coated with a conductive metal, and combinations thereof.

Meanwhile, as an example, the negative electrode for an all-solid-state battery may be a precipitation-type negative electrode. The precipitation-type negative electrode refers to a negative electrode that does not have a negative electrode active material when the battery is assembled, but in which lithium metal and the like are precipitated during battery charging, and the precipitated lithium metal and the like serve as a negative electrode active material.

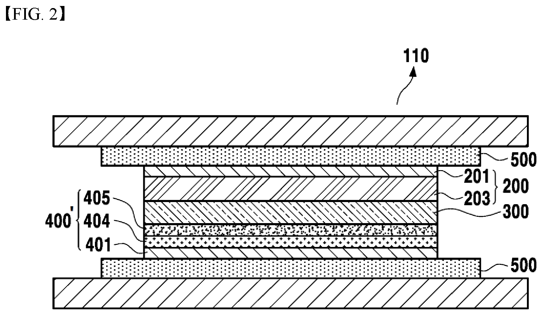

FIG. 2 is a schematic cross-sectional view of an all-solid-state battery 110 including a precipitation-type negative electrode. Referring to FIG. 2, the precipitation-type negative electrode 400' may include a current collector 401 and a negative electrode coating layer 405 located on the current collector. In the all-solid-state battery having such a precipitation-type negative electrode 400', initial charging begins in the absence of a negative electrode active material, and during charging, a high density of lithium metal and the like is precipitated between the current collector 401 and the negative electrode coating layer 405 and a lithium metal layer 404 is formed, which may serve as a negative electrode active material. Thus, in an all-solid-state battery that has been charged at least once, the precipitation-type negative electrode 400' may include the current collector 401, the lithium metal layer 404 located on the current collector 401, and the negative electrode coating layer 405 located on the metal layer. The lithium metal layer 404 refers to a layer in which lithium metal and the like are precipitated during the charging process of the battery, and may be referred to as a metal layer or a negative electrode active material layer.

The negative electrode coating layer 405 may include a metal and/or a carbon material that acts as a catalyst.

The metal may include, for example, gold, platinum, palladium, silicon, silver, aluminum, bismuth, tin, zinc, or a combination thereof, and may be composed of one of these metals or several types of alloys. The average particle diameter (D50) of the metal may be 4 µm or less, for example, 10 nm to 4 µm, 10 nm to 2 µm, or 10 nm to 1 µm.

The carbon material may be, for example, crystalline carbon, non-graphitic carbon, or a combination thereof. The crystalline carbon may be, for example, at least one selected from natural graphite, artificial graphite, mesophase carbon microbeads, and combinations thereof. The non-graphitic carbon may be at least one selected from carbon black, activated carbon, acetylene black, Denka black, ketjen black, furnace black, graphene, and combinations thereof.

When the negative electrode coating layer 405 includes both the metal and the carbon material, the mixing ratio of the metal and the carbon material may be, for example, 1:10 to 1:2, 1:10 to 2:1, 5:1 to 1:1, or 4:1 to 2:1. In this case, the precipitation of lithium metal may be effectively promoted and the characteristics of the all-solid-state battery may be improved. The negative electrode coating layer 405 may include, for example, a carbon material, on which a catalyst metal is supported, or a mixture of metal particles and carbon material particles.

The negative electrode coating layer 405 may further include a binder, and the binder may be, for example, a conductive binder. In addition, the negative electrode coating layer 405 may further include general additives such as a filler, a dispersant, and an ionic conductive material.

The negative electrode coating layer 405 may have a thickness of, for example, 1 µm to 20 µm, 2 µm to 10 µm, or 3 µm to 7 µm. The thickness of the negative electrode coating layer 405 may be 50% or less, 20% or less, or 5% or less of the thickness of the positive electrode active material layer. When the thickness of the negative electrode coating layer 405 is excessively thin, the coating layer may collapse due to the lithium metal layer 404, and when the thickness of the negative electrode coating layer 405 is excessively thick, the density of the all-solid-state battery may decrease and internal resistance may increase.

For example, the precipitation-type negative electrode 400' may further include a thin film on the surface of the current collector, that is, between the current collector and the negative electrode coating layer. The thin film may include an element that can form an alloy with lithium. Elements that can form an alloy with lithium may be, for example, gold, silver, zinc, tin, indium, silicon, aluminum, bismuth, or the like, and may be composed of one type of these elements or several types of alloys. The thin film may further flatten the precipitation form of the lithium metal layer 404 and further improve the characteristics of the all-solid-state battery. The thin film may be formed through, for example, vacuum deposition, sputtering, or plating methods. The thickness of the thin film may be, for example, 1 nm to 800 nm or 100 nm to 500 nm.

The lithium metal layer 404 may include lithium metal or a lithium alloy. The lithium alloy may be, for example, an Li-Al alloy, an Li-Sn alloy, an Li-In alloy, an Li-Ag alloy, an Li-Au alloy, an Li-Zn alloy, an Li-Ge alloy, or an Li-Si alloy.

The lithium metal layer 404 may have a thickness of 1 µm to 500 µm, 1 µm to 200 µm, 1 µm to 100 µm, or 1 µm to 50 µm. When the thickness of the lithium metal layer 404 is excessively thin, it is difficult to store lithium, and when the thickness of the lithium metal layer 404 is excessively thick, the volume of the battery increases, and thus the performance of the battery may decrease.

When the precipitation-type negative electrode is applied, the negative electrode coating layer 405 serves to protect the lithium metal layer 404 and suppress an increase in precipitation of lithium dendrites. Accordingly, short circuits and capacity degradation of the all-solid-state battery may be reduced and lifetime characteristics may be improved.

### Solid electrolyte layer

The solid electrolyte layer 300 includes a solid electrolyte, and the solid electrolyte may be an inorganic solid electrolyte, such as a sulfide-based solid electrolyte and an oxide-based solid electrolyte, or a solid polymer electrolyte. The description of the types of solid electrolytes are omitted because it is the same as described above.

As an example, the solid electrolyte included in the positive electrode 200 and the solid electrolyte included in the solid electrolyte layer 300 may include the same compound, and may be the same sulfide-based solid electrolyte and for example, the same argyrodite-type sulfide-based solid electrolyte. In this case, the overall performance of the all-solid-state battery may be improved, and stable operation may be possible.

In addition, the average particle diameter (D50) of the solid electrolyte included in the positive electrode 200 may be smaller than the average particle diameter (D50) of the solid electrolyte included in the solid electrolyte layer 300. In this case, overall performance may be improved by maximizing the energy density of the all-solid-state battery and increasing the mobility of lithium ions. For example, the average particle diameter (D50) of the solid electrolyte included in the positive electrode 200 may be 0.5 µm to 2.0 µm, or 0.5 µm to 1.5 µm, and the average particle diameter (D50) of the solid electrolyte in the solid electrolyte layer 300 may be 2.1 µm to 5.0 µm, 2.1 µm to 4.0 µm, or 2.5 µm to 3.5 µm. Within the above particle diameter ranges, the energy density of the all-solid-state battery may be maximized while reducing resistance as lithium ions are easily transferred, and thus the overall performance of the all-solid-state battery may be improved. Here, the average particle diameter (D50) of the solid electrolyte may be measured through a particle size analyzer using a laser diffraction method. Alternatively, the D50 value may be calculated by selecting about 30 random particles from micrographs such as scanning electron micrographs, measuring the particle size, and obtaining the particle size distribution.

The solid electrolyte layer may further include a binder in addition to the solid electrolyte. Here, the binder may be styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be, for example, butyl acrylate, polyacrylate, polymethacrylate, or a combination thereof.

The solid electrolyte layer may be formed by adding a solid electrolyte to a binder solution, coating a base film with it, and drying the film. The solvent of the binder solution may be isobutyl isobutyrate, xylene, toluene, benzene, hexane, or a combination thereof, or the compound represented by Chemical Formula 1 and/or the compound represented by Chemical Formula 2. Since the process of forming the solid electrolyte layer is widely known in the art, detailed description thereof will be omitted.

The thickness of the solid electrolyte layer may be, for example, 10 µm to 150 µm.

The solid electrolyte layer may further include an alkali metal salt, an ionic liquid, and/or a conductive polymer.

The alkali metal salt may be, for example, a lithium salt. In the solid electrolyte layer, the content of lithium salt may be 1M or more, for example, 1M to 4M. Within the above range, the lithium salt may improve ionic conductivity by improving the mobility of lithium ions in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoro methanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or combinations thereof.

In addition, the lithium salt may be an imide-based lithium salt. For example, the imide-based lithium salt may be lithium bis(trifluoro methanesulfonyl)imide (LiTFSI, LiN(SO₂CF₃)₂), and lithium bis(fluorosulfonyl)imide (LiFSI, LiN(SO₂F)₂). The lithium salt may maintain or improve ionic conductivity by maintaining appropriate chemical reactivity with an ionic liquid.

The ionic liquid refers to a salt or room temperature molten salt, which has a melting point below room temperature and is in a liquid state at room temperature and composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based cations and mixtures thereof, and b) one or more anions selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be one or more selected from the group consisting of N-methyl-N-propylpyrrolidinium bis(trifluoromethanesulfonyl)imide N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

The weight ratio of the solid electrolyte and the ionic liquid in the solid electrolyte layer may be 0.1:99.9 to 90:10, for example, 10:90 to 90:10, 20:80 to 90:10, 30:70 to 90:10, 40:60 to 90:10, or 50:50 to 90:10. A solid electrolyte layer that satisfies the above range may maintain or improve ionic conductivity by increasing the electrochemical contact area with the electrode. Thus, the energy density, discharge capacity, and rate characteristics of the all-solid-state battery may be improved.

The all-solid-state battery according to an embodiment of the present invention may be manufactured by sequentially stacking a positive electrode, a solid electrolyte, and a negative electrode to prepare a laminate and then pressing the laminate.

The pressing may be performed at a temperature of, for example, 25 °C to 90 °C, and may be performed at a pressure of 550 MPa or less, or 500 MPa or less, for example, 400 MPa to 500 MPa. The pressing may be, for example, isostatic pressing, roll pressing, or plate pressing.

The all-solid-state battery may be a unit cell having a structure of positive electrode/ solid electrolyte layer/negative electrode, a bi-cell having a structure of positive electrode/solid electrolyte layer/negative electrode/solid electrolyte layer/positive electrode, or a laminated battery in which unit cell structure is repeated.

The shape of the all-solid-state battery is not particularly limited, and may be, for example, coin-shaped, button-shaped, sheet-shaped, stacked-type, cylindrical-shaped, flat-shaped, etc. The all-solid-state battery may also be applied to medium to large-sized batteries used in electric vehicles. For example, the battery may be used in hybrid electric vehicles such as plug-in hybrid electric vehicles (PHEVs). The battery may also be applied to energy storage systems (ESSs), which store a large amount of power, electric bicycles, or power tools.

### [Mode for Invention]

Hereinafter, the examples and comparative examples of the present invention will be described. The following examples are only examples of the present invention, and the present invention is not limited thereto.

### Example 1

### 1. Manufacture of positive electrode

In a total of 100 parts by weight based on solid content, 85 parts by weight of LiNi_{0.9}Co_{0.05}Mn_{0.05}O₂ positive electrode active material coated with Li₂O-ZrO₂, 13.61 parts by weight of Li₆PS₅Cl lithium argyrodite-type solid electrolyte, 0.6 parts by weight of poly(vinylidene fluoride-co-hexafluoropropylene) (PVDF-HFP) binder, 0.18 parts by weight of lithium bis(trifluoromethane)sulfonimide salt (LiTFSI) as an electrolyte salt, 0.05 parts by weight of poly(ethylene glycol) diacrylate (Mn: 700), 0.4 parts by weight of carbon nanotube conductive material, and 0.16 parts by weight of dispersant were prepared and added to a dispersion medium (consisting of only n-octyl acetate (OA)). The mixture was put in a Thinky mixer and 2 mm zirconia balls were added and stirred to prepare a positive electrode composition. The content of the dispersion medium was 30 parts by weight based on 100 parts by weight of solid content. The solid content represents the total of the positive electrode active material, the solid electrolyte, the binder, the electrolyte salt, poly(ethylene glycol) diacrylate, and the conductive material.

The prepared positive electrode composition was applied onto the positive electrode current collector using a bar coater and dried in a convection oven at 80 °C for 10 minutes, thereby manufacturing a positive electrode with a positive electrode active material layer formed on the current collector.

### 2. Manufacture of all-solid-state battery

### (1) Preparation of solid electrolyte layer

Argyrodite-type solid electrolyte Li₆PS₅Cl (D50=3 µm) was added to a binder solution, in which an acrylic binder (SX-A334 from Nippon Zeon Co., Ltd) was dissolved in isobutylyl isobutyrate (IBIB) solvent, and stirred in a Thinky mixer to adjust to an appropriate viscosity. After adjusting the viscosity, a slurry was prepared by adding 2 mm zirconia balls and stirring the mixture again using a Thinky mixer. The slurry included 98.5 wt% of solid electrolyte and 1.5 wt% of binder. The slurry was applied onto a release PET film using a bar coater and dried at room temperature to prepare a solid electrolyte layer.

### (2) Manufacture of negative electrode

A catalyst was prepared by mixing carbon black with a primary particle diameter (D50) of about 30 nm and silver (Ag) with an average particle diameter (D50) of about 60 nm at a weight ratio of 3:1, and 0.25 g of the catalyst was added to 2 g of NMP solution containing 7 wt% of polyvinylidene fluoride binder and mixed to prepare a negative electrode coating layer composition. The composition was applied on a nickel foil current collector using a bar coater and vacuum dried to prepare a precipitation-type negative electrode with a negative electrode coating layer formed on the current collector.

### (3) Manufacture of final all-solid-state battery

The positive electrode, the negative electrode, and the solid electrolyte layer were cut, the solid electrolyte layer was stacked on the positive electrode, and then the negative electrode was stacked on top of the solid electrolyte layer. The laminate was sealed in a pouch form and subjected to warm isostatic pressing (WIP) at a high temperature of 85 °C and 500 MPa for 30 minutes to manufacture an all-solid-state battery. In the pressed state, the thickness of the positive electrode active material layer was about 100 µm, the thickness of the negative electrode coating layer was about 7 µm, and the thickness of the solid electrolyte layer was about 60 µm.

### Examples 2 and 3 and Comparative Example 1

Positive electrodes and all-solid-state batteries were manufactured in the same manner as in Example 1, except that in the preparation of the positive electrode composition, each content of the poly(vinylidene fluoride-co(co)-hexafluoropropylene) (PVDF-HFP) binder, the lithium bis(trifluoromethane)sulfonimide salt (LiTFSI), and the poly(ethylene glycol) diacrylate (PEGDA) was changed as shown in Table 1 (units: parts by weight), and the content of the dispersant was changed to a total of 100 parts by weight based on solid content.

### Comparative Example 2

A positive electrode and all-solid-state battery were manufactured in the same manner as in Example 1, except that in the preparation of the positive electrode composition, 0.06 parts by weight of poly(ethylene glycol) dimethyl ether (PEGDME) was used instead of poly(ethylene glycol) diacrylate, and the content of the dispersant was changed to a total of 100 parts by weight based on solid content.

**[Table 1]**

| | PVDF-HFP | LiTFSI | PEGDA | PEGDME |
|---|---|---|---|---|
| Example 1 | 0.6 | 0.18 | 0.05 | 0 |
| Example 2 | 0.6 | 0.18 | 0.1 | 0 |
| Comparative Example 1 | 0.6 | 0.18 | 0 | 0 |
| Comparative Example 2 | 0.6 | 0.18 | 0 | 0.06 |

### Evaluation Example 1: Evaluation of initial charge/discharge capacity of all-solid-state rechargeable battery

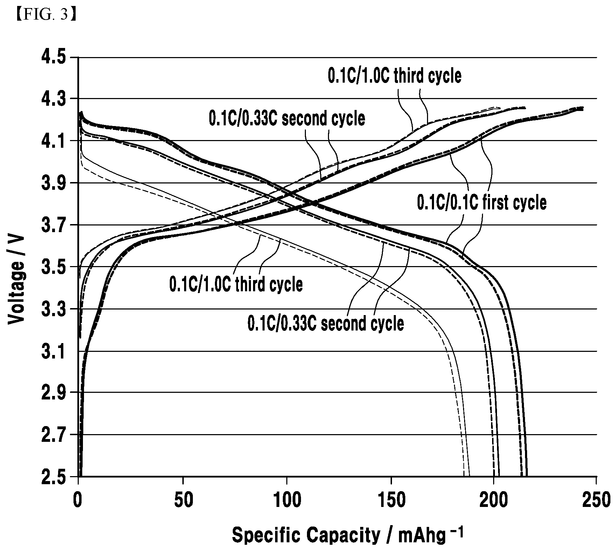

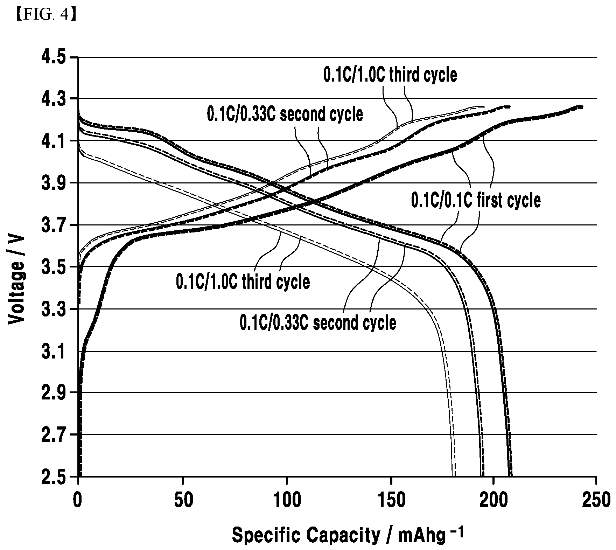

The all-solid-state rechargeable batteries manufactured in Examples and Comparative Examples were charged at a constant current of 0.1 C at 45 °C to an upper limit voltage of 4.25 V and then discharged at 0.1 C to a final voltage of 2.5 V to perform initial charging and discharging. A second cycle was performed under 0.1 C charge and 0.33 C discharge conditions in the same voltage range. Afterward, a third cycle was performed under 0.1 C charge and 1.0 C discharge conditions in the same voltage range. The results are shown in Table 2, FIG. 3, and FIG. 4.

**[Table 2]**

| | First cycle | | | Second cycle | | Third cycle | |
|---|---|---|---|---|---|---|---|
| | Charge capacity | Discharge capacity | Efficiency (%) | Charge capacity | Discharge capacity | Charge capacity | Discharge capacity |
| | (m Ah/g) | (m Ah/g) | | (m Ah/g) | (m Ah/g) | (m Ah/g) | (m Ah/g) |
| Example 1 | 241.0 | 213.6 | 88.7 | 212.8 | 200.3 | 200.1 | 185.5 |
| Example 2 | 242.5 | 215.8 | 89 | 215.1 | 202.6 | 202.4 | 188.0 |
| Comparative Example 1 | 239.7 | 208.4 | 87 | 208.4 | 196.1 | 196.2 | 182.5 |
| Comparative Example 2 | 239.1 | 208.2 | 87 | 208.1 | 195.9 | 195.5 | 181.7 |

As shown in Table 2, FIG. 3, and FIG. 4, the all-solid-state batteries of Example 1 and Example 2 had higher capacities than Comparative Example 1 and Comparative Example 2 in all of the first, second, and third cycles.

### Evaluation Example 2: Evaluation of ionic conductivity and electronic conductivity

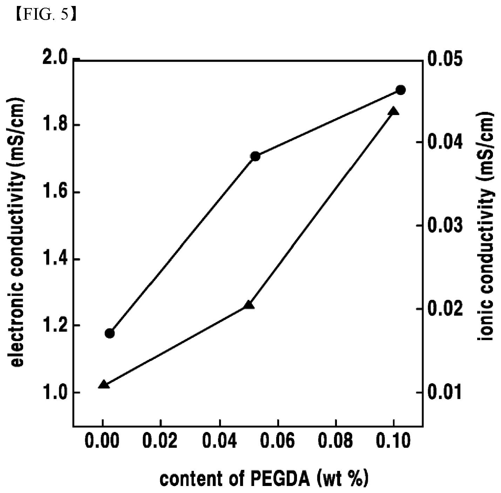

The ionic conductivity and electronic conductivity of the positive electrodes manufactured in Examples and Comparative Examples were measured, and the results thereof are shown in FIG. 5. The positive electrodes manufactured in Examples and Comparative Examples were cut into 10-pi circles and then measured with a torque of 10 Nm applied to the positive electrodes through electrochemical impedance spectroscopy (EIS). The EIS was conducted at an amplitude of 50 mV, a frequency of 500 kHz to 50 mHz, under an air atmosphere, and at 45 °C.

As shown in FIG. 5, it can be seen that the ionic conductivity and electronic conductivity were increased by adding PEGDA.

### Evaluation Example 3: Evaluation of battery lifetime characteristics

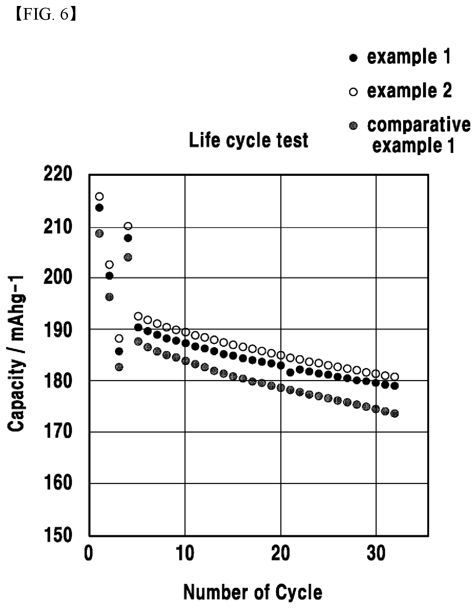

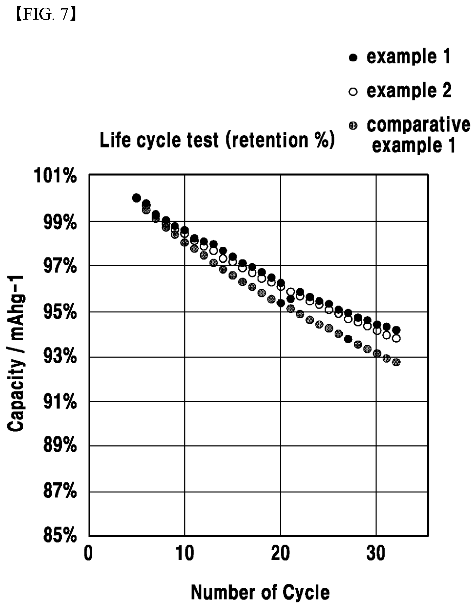

The batteries of Example 1, Example 2, and Comparative Example 1 were initially charged and discharged in the same manner as in Evaluation Example 1 and then repeatedly charged at 0.33 C and discharged at 0.33 C 45 times in a voltage range of 2.5 V to 4.25 V at 45 °C to evaluate lifetime characteristics, and the results thereof are shown in FIGS. 6 and 7.

Referring to FIGS. 6 and 7, it can be seen that the lifetime characteristics of the batteries of Example 1 and Example 2 were improved compared to the battery of Comparative Example 1 at the same number of cycles.

Although the preferred embodiments have been described in detail above, the scope of the present invention is not limited thereto. In addition, it should be understood that various modifications and improvements implemented by those skilled in the art using the basic concepts defined in the claims are within the scope of the present invention.

## Claims

1. A positive electrode for an all-solid-state battery comprising:
a current collector; and
a positive electrode active material layer located on the current collector,
wherein the positive electrode active material layer includes a positive electrode active material, a sulfide-based solid electrolyte, a dispersion medium including a compound of Chemical Formula 1, a binder, an electrolyte salt, one or more selected from a monofunctional or higher (meth)acrylate having an alkylene glycol group, an oligomer thereof, and a cross-linked product thereof, and a conductive material,
[Chemical Formula 1] CH₃C(=O)O-R¹
wherein R¹ is a C₇ to C₉ alkyl group.

2. The positive electrode of claim 1, wherein the binder, the electrolyte salt, and one or more of the monofunctional or higher (meth)acrylate having an alkylene glycol group, an oligomer thereof, and a cross-linked product thereof are contained in the positive electrode active material layer as an adhesive elastomer.

3. The positive electrode of claim 3, wherein at least a portion of the monofunctional or higher (meth)acrylate having an alkylene glycol group, an oligomer thereof, and a cross-linked product thereof is bonded to one or more of the binder and the electrolyte salt.

4. The positive electrode of claim 1, wherein one or more of the monofunctional or higher (meth)acrylate having an alkylene glycol group, an oligomer thereof, and a cross-linked product thereof are included in an amount of 1 to 30 wt% of the total amount of the binder, the electrolyte salt, and one or more of the monofunctional or higher (meth)acrylate having an alkylene glycol group, an oligomer thereof, and a cross-linked product thereof.

5. The positive electrode of claim 1, wherein one or more of the monofunctional or higher (meth)acrylate having an alkylene glycol group, an oligomer thereof, and a cross-linked product thereof are included in an amount of 0.001 to 1 wt% in the positive electrode active material layer.

6. The positive electrode of claim 1, wherein the monofunctional or higher (meth)acrylate having an alkylene glycol group includes one or more of compounds represented by Chemical Formula 4 and Chemical Formula 5 below: 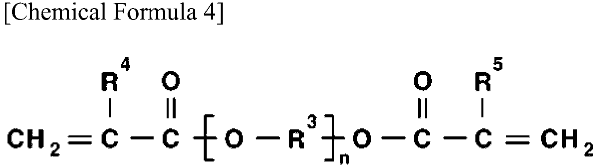 (in Chemical Formula 4,
R³ is a straight or branched alkylene group having 1 to 5 carbon atoms,
R⁴ and R⁵ are each independently hydrogen or a methyl group, and
n is an integer from 2 to 1000,) 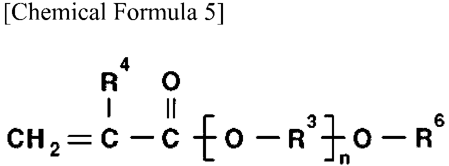
(in Chemical Formula 5,
R³ is a straight or branched alkylene group having 1 to 5 carbon atoms,
R⁴ is hydrogen or a methyl group,
R⁶ is hydrogen or a straight or branched alkyl group having 1 to 5 carbon atoms, and
n is an integer from 2 to 1000).

7. The positive electrode of claim 1, wherein the monofunctional or higher (meth)acrylate having an alkylene glycol group includes one or more of poly(ethylene glycol) di(meth)acrylate, poly(ethylene glycol) mono(meth)acrylate, and poly(ethylene glycol) methyl ether mono(meth)acrylate.

8. The positive electrode of claim 1, wherein the electrolyte salt is a fluorine-containing lithium salt.

9. The positive electrode of claim 1, wherein the binder includes one or more of polyvinylidene fluoride, a polyvinylidene fluoride-hexafluoropropylene copolymer, polytetrafluoroethylene, styrene butadiene rubber, polyacrylonitrile, and polymethyl (meth)acrylate.

10. The positive electrode of claim 1, wherein the binder is a polyvinylidene fluoride-hexafluoropropylene copolymer, the electrolyte salt is a perfluoroalkane sulfonyl imide salt, and the monofunctional or higher (meth)acrylate having an alkylene glycol group is poly(ethylene glycol) di(meth)acrylate.

11. The positive electrode of claim 1, wherein the positive electrode active material layer includes:
55 wt% to 99 wt% of the positive electrode active material;
0.1 wt% to 35 wt% of the sulfide-based solid electrolyte;
0.1 wt% to 5 wt% of the binder;
0.001 wt% to 10 wt% of the electrolyte salt;
0.001 wt% to 1 wt% of one or more of the monofunctional or higher (meth)acrylate having an alkylene glycol group, an oligomer thereof, and a cross-linked product thereof; and
0.1 wt% to 5 wt% of the conductive material.

12. An all-solid-state battery comprising:
the positive electrode according to any one of claims 1 to 11;
a negative electrode; and
a solid electrolyte layer located between the positive electrode and the negative electrode.

13. The battery of claim 12, wherein the negative electrode includes a current collector, a negative electrode coating layer located on the current collector, and a lithium metal layer formed between the current collector and the negative electrode coating layer during initial charging.

14. The battery of claim 12, wherein the solid electrolyte included in the positive electrode and the solid electrolyte included in the solid electrolyte layer include the same compound.

15. The battery of claim 12, wherein the average particle diameter (D50) of the solid electrolyte included in the positive electrode is smaller than the average particle diameter (D50) of the solid electrolyte included in the solid electrolyte layer, and the average particle diameter (D50) of the solid electrolyte included in the positive electrode is 0.5 µm to 2.0 µm, and the average particle diameter (D50) of the solid electrolyte included in the solid electrolyte layer is 2.1 µm to 5.0 µm.

16. A positive electrode composition for an all-solid-state battery, comprising:
a positive electrode active material;
a sulfide-based solid electrolyte;
a dispersion medium including a compound of Chemical Formula 1 below;
a binder;
an electrolyte salt;
a monofunctional or higher (meth)acrylate having an alkylene glycol group, or an oligomer thereof; and
a conductive material,
[Chemical Formula 1] CH₃C(=O)O-R¹
wherein R¹ is a C₇ to C₉ alkyl group.

17. The composition of claim 16, wherein
55 to 99 parts by weight of the positive electrode active material,
0.1 to 35 parts by weight of the sulfide-based solid electrolyte,
0.1 to 5 parts by weight of the binder,
0.001 to 10 parts by weight of the electrolyte salt,
0.001 to 1 part by weight of the monofunctional or higher (meth)acrylate having an alkylene glycol group or an oligomer thereof, and
0.1 to 5 parts by weight of the conductive material are included in a total of 100 parts by weight based on solid content, and 20 to 100 parts by weight of the dispersion medium is included based on the total of 100 parts by weight.
